(19) Europäisches Patentamt
European Patent Office
Office européen des brevets

(11) **EP 1 425 637 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: 02774316.0

(22) Anmeldetag: **09.09.2002**

(51) Int Cl.:
*G05B 13/04* (2006.01)   *F02M 25/07* (2006.01)
*G05B 11/01* (2006.01)

(86) Internationale Anmeldenummer:
**PCT/DE2002/003348**

(87) Internationale Veröffentlichungsnummer:
**WO 2003/023531 (20.03.2003 Gazette 2003/12)**

(54) **ADAPTIVES REGELVERFAHREN**

ADAPTIVE CONTROL METHOD

PROCEDE DE REGULATION ADAPTATIF

(84) Benannte Vertragsstaaten:
**DE FR GB IT**

(30) Priorität: **10.09.2001 DE 10144337**

(43) Veröffentlichungstag der Anmeldung:
**09.06.2004 Patentblatt 2004/24**

(73) Patentinhaber: **SIEMENS AKTIENGESELLSCHAFT 80333 München (DE)**

(72) Erfinder:
• **KÄSBAUER, Michael 93073 Neutraubling (DE)**

• **STADLER, Wolfgang 84061 Ergoldsbach (DE)**

(56) Entgegenhaltungen:
**DE-A- 19 749 056     DE-A- 19 834 477
US-A- 5 690 083**

• **PATENT ABSTRACTS OF JAPAN vol. 1995, no. 09, 31. Oktober 1995 (1995-10-31) & JP 07 141002 A (YAMATAKE HONEYWELL CO LTD), 2. Juni 1995 (1995-06-02)**
• **PATENT ABSTRACTS OF JAPAN vol. 1999, no. 12, 29. Oktober 1999 (1999-10-29) & JP 11 194825 A (UNISIA JECS CORP), 21. Juli 1999 (1999-07-21)**

**Beschreibung**

Die vorliegende Erfindung bezieht sich auf ein Regelverfahren, bei dem die Stellung einer Stelleinrichtung, die eine Einrichtung zur Stellungsrückmeldung aufweist, in einem Bereich zwischen zwei Endstellungen unter Verwendung einer Messgröße, die von der Einrichtung zur Stellungsrückmeldung in Abhängigkeit von der Stellung der Stelleinrichtung abgegeben wird, und einer Kennlinie, mittels derer jedem Wert der Messgröße ein Ist-Wert- für die Stellung zugeordnet wird, auf einen Soll-Wert für die Stellung geregelt wird.

Derartige gattungsgemäße Regelverfahren sind grundsätzlich bekannt und können in vielen Bereichen eingesetzt werden.

Beispielsweise ist es denkbar, ein solches Verfahren bei der Abgasrückführung einer Brennkraftmaschine zu verwenden. Durch eine Rückführung des Abgases einer Brennkraftmaschine in deren Lufteinlasskanal ist es möglich, die Verbrennungsspitzentemperatur in der Brennkraftmaschine und damit den $NO_x$-Gehalt der Abgase zu senken. Hierzu wird der Abgasrückfluss von einem Steuergerät zur Steuerung der Brennkraftmaschine mittels eines Abgasrückführventils gesteuert. Das als Stelleinrichtung fungierende Abgasrückführventil kann hierzu eine drehbare Klappe aufweisen, mit der der Abgasrückführungskanal ganz oder teilweise verschließbar ist. Als Einrichtung zur Stellungsrückmeldung kann ein mit der Klappe drehbarer Drehwiderstand mit einer elektrischen Schaltung vorgesehen sein, die ein den Spannungsabfall an dem Drehwiderstand wiedergebendes Signal ausgibt. Hängt der Widerstand des Drehwiderstand beispielsweise linear vom Drehwinkel ab, ergibt sich als Kennlinie eine Gerade, so dass durch Erfassung der Spannung an dem Drehwiderstand dessen Drehwinkel und damit die Stellung der Klappe einfach feststellbar ist. Die Stellung des Abgasrückführventils und insbesondere der Klappe könnte bei einer solchen Anordnung daher mit einem gattungsgemäßen Regelverfahren geregelt werden.

Die Genauigkeit der Steuerung kann sich jedoch während des Betriebs der Brennkraftmaschine zum einen durch eine Veränderung der Einrichtung zur Stellungsrückmeldung, beispielsweise des Drehwiderstands infolge einer Temperaturänderung, oder eine Veränderung der mechanischen Stellelemente, beispielsweise durch eine Verschmutzung der Klappe oder des Abgasrückführkanals, verändern. Dies kann dazu führen, dass die Güte der Abgasreinigung herabgesetzt wird und Normen für die Abgasemission nicht eingehalten werden.

Wird die Bewegung der Klappe durch mechanische Anschläge an den Endstellungen begrenzt, kann die Regelung auf der Basis einer nicht mehr gültigen Kennlinie dazu führen, dass bei Ansteuerung einer nicht mehr zutreffend festzustellenden Endstellung der die Klappe bewegende Motor diese gegen den Anschlag presst und dabei.unnötig hohen Strömen ausgesetzt ist, wodurch die Lebensdauer des Motors sinkt.

Die DE 198 34 477 A1 beschreibt eine Lageerfassungsschaltung, deren Kennlinie einfach anpaßbar ist. Der Abstract zu JP 07141002 offenbart ebenfalls eine Kennlinienanpassung. Die US 5.690.083 beschreibt eine Adaption des Mindestansteuersignals eines Abgasrückführventils während der normalen Regelgung.

Es ist Aufgabe der vorliegenden Erfindung, ein Regelverfahren der obengenannten Art bereitzustellen, das es erlaubt, die Zuverlässigkeit der Regelung während des Betriebs zu verbessern.

Die Aufgabe wird bei einem gattungsgemäßen Regelverfahren, dadurch gelöst, dass während der Regelung der Soll- oder der Ist-Wert für die Stellung überwacht wird und dass, wenn der Soll- bzw. Ist-Wert anzeigt, daß die Stellung der Stellungseinrichtung innerhalb eines vorgegebenen Abstands von einer für die Adaption vorgesehenen Adaptionsstellung liegt, die Kennlinie adaptiert wird, indem die Regelung unterbrochen wird, die Stelleinrichtung in die Adaptionsstellung gesteuert wird, in der Adaptionsstellung ein Wert der Messgröße als Adaptionswert erfasst wird und die Kennlinie unter Verwendung des Adaptionswertes und der Adaptionsstellung angepasst wird. Daraufhin wird die Regelung wieder aufgenommen.

Durch die Adaption der Kennlinie bei dem erfindungsgemäßen Verfahren kann gewährleistet werden, dass Veränderungen der Stelleinrichtung, die in Veränderungen der tatsächlichen Zuordnung des Wertes für die Adaptionsstellung und des in dieser Stellung erfassten Wertes der Messgröße resultieren, durch die Adaption der Kennlinie bei der Regelung berücksichtigten werden. Dadurch ist eine erhöhte Zuverlässigkeit der Regelung der Stellung der Stelleinrichtung gewährleistete

Bei dem erfindungsgemäßen Verfahren wird zur Adaption die Regelung unterbrochen und die Stelleinrichtung in die vorgegebene Adaptionsstellung gesteuert. Hierzu ist eine gewisse Mindestzeit erforderlich, die um so größer ist, je weiter die Ist-Stellung der Stelleinrichtung von der Adaptionsstellung entfernt liegt. Vorteilhafterweise wird daher zur Erzielung einer besonders schnellen und daher die Regelung nur wenig beeinträchtigenden Adaption der Soll- oder der Ist-Wert für die Stellung während der Regelung überwacht, und diese nur dann zur Adaption unterbrochen, wenn die Stellung der Stelleinrichtung nahe der Adaptionsstellung ist und daher schnell in diese gesteuert werden kann.

Im erfindungsgemäßen Verfahren kann der Ist-Wert für die Stellung oder der Soll-Wert für die Stellung überwacht werden. Unter der Überwachung des Ist-Wertes der Stellung wird dabei insbesondere auch die direkte Überwachung des entsprechenden, von der Einrichtung zur Stellungsrückmeldung erfassten Wertes der Messgröße verstanden. In diesem Fall kann eine Prüfung des Kriteriums, ob der Ist-Wert für die Stellung in nerhalb eines vorgegebenen Abstands von dem vorgegebenen Wert für die Adaptionsstellung liegt, dadurch erfolgen, dass geprüft wird, oh ein von der Einrichtung zur Stellungsrückmeldung erfasster Wert der Messgröße innerhalb eines entsprechenden Abstandes von dem dem Wert für die Adaptionsstellung entsprechend der Kennlinie zugeordneten Wert der Messgröße liegt.

Erfindungsgemäß kann die Adaption durchgeführt werden, wenn der Soll- bzw. der Ist-Wert für die Stellung innerhalb eines vorgegebenen Abstands von einem vorgegebenen Wert für die Adaptionsstellung liegt. Eine Adaption ist bei Erreichen einer solchen Stellung jedoch nicht immer notwendig. Daher ist es bevorzugt, dass während der Regelung die Erfüllung mindestens einer weiteren Bedingung in Bezug auf die Regelung überwacht und die Adaption der Kennlinie nur durchgeführt wird, wenn die weitere Bedingung erfüllt ist. Hierdurch kann vorteilhafterweise erreicht werden, dass die Regelung nur dann unterbrochen wird, wenn eine Adaption notwendig erscheint.

Besonders bevorzugt kann dabei als weitere Bedingung vorgesehen sein, dass nach der Durchführung einer Adaption eine vorgegebene Mindestzeit vergehen muss, bis die nächste Adaption durchgeführt werden kann. Hierdurch kann insbesondere vermieden werden, dass bei einer zufälligen Regelsituation, in der die Soll-Stellung der Stelleinrichtung in der Nähe der Adaptionsstellung liegt, unnötig häufig die Regelung unterbrochen und eine Adaption durchgeführt wird. Somit wird die Beeinträchtigung des Gesamtregelverhaltens so gering wie möglich gehalten.

Alternativ oder zusätzlich kann die zeitliche Änderung der Soll-Stellung oder der Ist-Stellung überwacht werden, und die Adaption der Kennlinie nur durchgeführt werden, wenn der Betrag der zeitlichen Änderung der Soll- beziehungsweise der Ist-Stellung kleiner als ein Maximalwert ist. Durch die Überwachung des Betrages der zeitlichen Änderung der Stellung bzw. des Wertes für die Stellung, die einer Überwachung des Betrages der Änderungsgeschwindigkeit der Soll- beziehungsweise Ist-Stellung entspricht, ist vermieden, dass eine Adaption in einer Situation durchgeführt wird, in der, angezeigt durch die schnelle Änderung des Soll- beziehungsweise Ist-Wertes, eine Regelung besonders notwendig ist und einer Unterbrechung der Regelung dementsprechend zu Störungen führen würde.

Die Erfassung von Werten der Messgröße für die Adaption sollte erst erfolgen, wenn die Stelleinrichtung die vorgesehene Adaptionsstelluag erreicht hat. Zusätzlich kann eine eingeleitete Adaption abgebrochen werden falls eine oder mehrere Adaptionsbedingungen nicht mehr erfüllt sind. Dann kann der letztgültige oder auch ein Ersatzwert verwendet werden.

Vorteilhaft kann während der Ansteuerung der Adaptionsstellung bereits der Wert der Messgröße daraufhin überwacht werden, ob ein stationärer Zustand erreicht wird, und in diesem Fall mit der Erfassung der Werte für die eigentliche Adaption begonnen werden.

Die zur Adaption verwendete Adaptionsstellung wird jedoch besonders vorteilhaft so gewählt, dass sie ohne Benutzung der erfassten Werte der Messgröße der Einrichtung zur Stellungsrückmeldung ansteuerbar ist, da dann die Adaptionsstellung mit größerer Zuverlässigkeit angesteuert werden kann.

Es ist daher bevorzugt, dass eine Stelleinrichtung verwendet wird, die so ausgebildet ist, dass deren Stellung nicht über mindestens eine der Endstellungen hinaus veränderbar ist, und dass diese Endstellung der Stelleinrichtung als Adaptionsstellung verwendet wird. Dazu kann beispielsweise eine mechanische Stelleinrichtungen zur Begrenzung der Bewegung einen Anschlag aufweisen, der eine Bewegung der Stelleinrichtung über die Endstellung hinaus verhindert. Die Endstellung kann jedoch auch durch eine durch die Auslegung der Stelleinrich tung bedingte Begrenzung elektrischer Größen, beispielsweise von maximal bereitstellbaren Halteströmen, definiert sein.

Es ist weiter bevorzugt, dass der Wert für die Messgröße nach Ablauf einer vorgegebenen Zeitspanne nach Unterbrechung der Regelung erfasst wird, d. h. nach Beginn der Adaption. Diese Zeitspanne wird vorzugsweise so gewählt, dass bei üblichen Stellgeschwindigkeiten die Adaptionsstellung sicher erreicht ist, wenn sich die Stelleinrichtung zu Beginn der Adaption in dem zur Auslösung der Adaption vorgesehenen Bereich befindet.

Besonders einfach und daher bevorzugt kann in dem Fall, dass die Stelleinrichtung eine elektrisch betriebene Antriebseinrichtung aufweist, das Erreichen der Adaptionsstellung durch Überwachung der Stromaufnahme der Antriebseinrichtung festgestellt werden. Dies ist- insbesondere dann möglich, wenn die Adaptionsstellung in einer Endstellung liegt, an der ein Anschlag vorgesehen ist, der eine Veränderung der Stellung der Stelleinrichtung über den Anschlag hinaus mechanisch verhindert. Hierdurch wird ein besonders einfaches Verfahren zur Überprüfung des Erreichens der Adaptionsstellung bereitgestellt.

Bevorzugt ist die Kennlinie als Funktion darstellbar, die durch ein oder zwei Paare von einander zugeordneten Adaptionswerten der Messgröße und dem dem Adaptionswert der Messgröße entsprechenden Wert für die Adaptionsstellung parametrisierbar ist, so dass für eine vollständige Adaption nur ein oder zwei Adaptionsstellungen angesteuert werden müssen. Obwohl die Adaptionsstellungen grundsätzlich beliebige, geeignete Stellung zwischen den Endstellungen sein können, ist es besonders bevorzugt, wenn die Funktion derart wählbar ist, dass die Kennlinie durch Adaption in den Endstellungen vollständig adaptierbar ist. Insbesondere kann es sich bei der Funktion um eine lineare Funktion, d. h. eine Geradengleichung, handeln. Es sind aber auch allgemein Kennlinien höherer Ordnung möglich.

Die Bestimmung des Adaptionswertes der Messgröße kann auf vielfältige Weise erfolgen. Im einfachsten Fall wird der erfasste Wert der Messgröße direkt verwendet. Es sind aber, je nach Anwendung, auch geeignete Filterungen denkbar.

Bei einer bevorzugten Weiterbildung des erfindungsgemäßen Regelverfahrens wird der in der Adaptionsstellung erfasste Wert der Messgröße einer Plausibilitätsprüfung unterzogen und bei Feststellung eines nicht plausiblen Wertes ein entsprechendes Signal an eine Diagnoseeinrichtung ausgegeben. Bei dieser Weiterbildungen wird also nicht nur die Kennlinie zur Verbesserung der Regelung adaptiert, sondern es kann durch die Plausibilitätsprüfung gleichzeitig eine Fehlerdiagnose der Stelleinrichtung erfolgen. Insbesondere kann gewährleistet werden, dass bei Auftreten von Fehlern an der Stelleinrichtung, die sich in nicht plausiblen Werten der Messgröße äußern, entsprechende Warnsignale ausgegeben oder Notprogramme bzw. Notläufe ausgeführt werden können. Weiterhin ist es einfach möglich, die Stelleinrichtung als Fehlerquelle zu identifizieren.

Es ist dabei besonders bevorzugt, dass bei der Plausibilitätsprüfung geprüft wird, ob der in der Adaptionsstellung erfasste Wert der Messgröße innerhalb eines vorgegebenen Wertebereichs liegt. Hierbei kann es sich insbesondere um einen, z. B. aus Herstellerangaben abgeleiteten Toleranzbereich handeln, innerhalb dessen erfasste, der Adaptionsstellung entsprechende Werte der Messgröße als nicht fehlerhaft anzusehen sind. Bei einem Verlassen dieses Bereichs ist von einem Fehler auszugehen, so dass dann ein entsprechendes Signal an eine Diagnoseeinrichtung ausgegeben wird.

Weiterhin ist es besonders bevorzugt, dass bei Feststellung nicht plausibler Werte der Messgröße bei der Adaption statt des erfassten Wertes der Messgröße ein vorgegebener Ersatzwert verwendet wird. Dann kann nach Beendigung der Adaption das Regelverfahren zunächst mit dem Ersatzwert weitergeführt werden, wodurch eine gewisse Mindestfunktionalität der Regelung auch bei Auftreten eines Fehlers gewährleistet ist.

Besonders bevorzugt können weiterhin Adaptionswerte aus mehreren Durchführungen der Adaption der Kennlinie zur Diagnose von Fehlern verwendet werden. Insbesondere können zeitlich aufeinanderfolgende Adaptionswerte der Messgröße, die derselben Adaptionsstellung entsprechen, auf eine Langzeitdrift hin untersucht werden. Bei Feststellung einer Langzeitdrift können dann entsprechende Diagnosesignale, z. B. an eine Diagnoseeinrichtung, ausgegeben werden.

Nach Erreichen der Adaptionsstellung wird bei dem erfindungsgemäßen Verfahren zunächst der Wert der Messgröße wenigstens einmal erfasst und zur Bestimmung des Adaptionswertes verwendet. Die in der Adaptionsstellung erfassten Werte der Messgröße können jedoch bedingt durch beispielsweise statistische Fehler bei der Erfassung der Messgröße durch die Einrichtung zur Stellungsrückmeldung schwanken, was die Genauigkeit der Adaption herabsetzen würde. Es ist daher bevorzugt, dass der Wert der Messgröße in der Adaptionsstellung mehrfach erfasst und der Adaptionswert der Messgröße durch eine Tiefpassfilterung gebildet wird. Hierzu kann insbesondere als Filter ein gleitender Mittelwert oder einen gewichteter gleitender Mittelwert verwendet werden.

Nach Beendigung der Adaption wird die Regelung erfindungsgemäß wieder aufgenommen. Bevorzugt wird dabei ein integrierendes Elemente des Regelverfahrens neu initialisiert. Hierdurch kann gewährleistet werden, dass durch die Unterbrechung der Regelung das integrierende Elemente, z.B. bei einem PID-Regler, keine grob unzutreffenden Werte annimmt.

Besonders bevorzugt wird das erfindungsgemäße Verfahren zur Regelung der Stellung eines Abgasrückführventils einer Brennkraftmaschine verwendet, wobei die Stelleinrichtung das Ab gasrückführventil umfasst. Hierdurch können beispielsweise durch Verschmutzung oder Temperaturänderungen aufgetretene Änderungen der Stelleinrichtung durch Adaption der Kennlinie ausgeglichen, beziehungsweise Fehler an der Stelleinrichtung erkannt werden.

Es sind aber auch andere Anwendungen denkbar, z.B. der Einsatz bei Drosselkappenstellern, bei Turbolader-Wastegates, bei Turboladern mit variabler Turbinengeometrie oder Schiebehülsenladern, bei elektromechanischen Ventiltrieben, bei Fenster- oder Scheibenwischerantrieben aber auch bei nicht automobilbezogenen Vorrichtungen, wie Werkzeugmaschinen o.ä.

Weiterer Gegenstand der Erfindung ist ein Steuergerät, das zur Durchführung des erfindungsgemäßen Regelverfahrens ausgebildet ist. Dies kann durch eine entsprechende digitale Schaltung oder Software erfolgen, die mit dem Steuergerät ausgeführt wird.

Die Erfindung wird nachfolgend beispielhaft anhand der Zeichnungen noch näher erläutert. Es zeigen:

Fig. 1          eine schematische Darstellung einer Brennkraftmaschine mit einer Abgasrückführung und einem Steuergerät nach einer bevorzugten Ausführungsform der Erfindung,

Fig. 2          eine schematische Darstellung der Kennlinie eines Drehwiderstands in der Abgasrückführung in Fig. 1 und

Fig. 3A, 3B und 3C    ein Ablaufdiagramm eines Regelverfahrens für das Abgasrückführventil in der Brennkraftmaschine in Fig. 1 nach einer bevorzugten Ausführungsform der Erfindung.

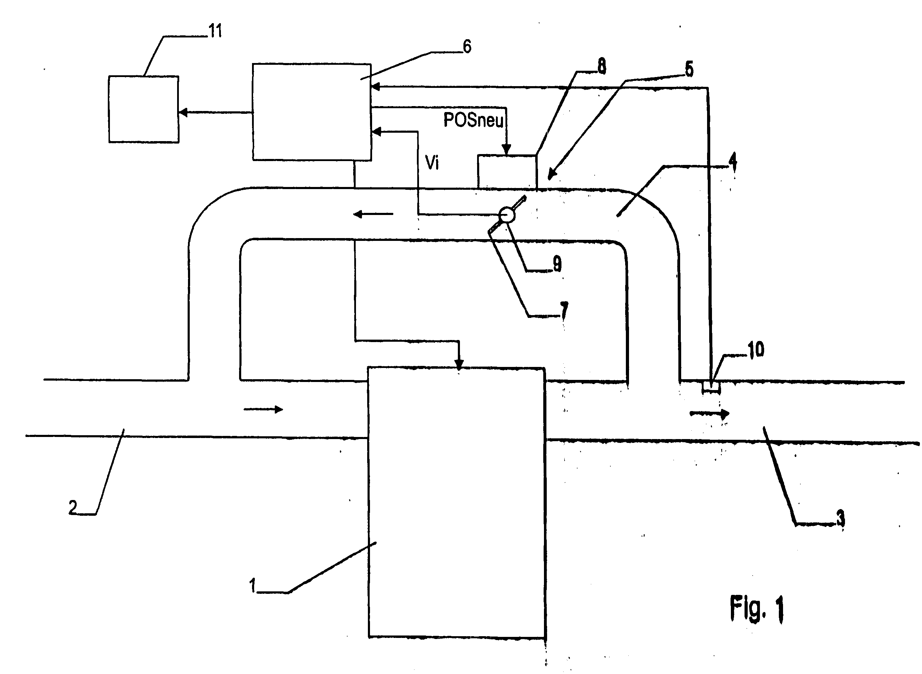

In Fig. 1 wird einer Brennkraftmaschine I über einen Lufteinlasskanal 2 Luft zur Verbrennung von Kraftstoff zugeführt. Über einen Abgaskanal 3 werden die bei der Verbrennung des Kraftstoffs erzeugten Abgase der Brennkraftmaschine 1 abgeführt. Über einen Abgasrückführungskanal 4 können Abgase dem Infteinlasskanal 2 zugeführt werden, un die Verbremungsspitzentemperatur in der Brennkraftmaschine 1 und damit den $NO_x$-Gehalt in den Abgasen abzusenken.

Zur Steuerung des zurückgeführten Abgasstroms ist ein Abgasrückführventil 5 vorgesehen, dessen Stellung über ein Steuergerät 6 geregelt wird, das auch, in Fig. 1 durch einen Pfeil angedeutet, in an sich bekannter Weise die Brennkraftmaschtine 1 Steuert. Hierzu sind an der Brennkraftmaschine an sich bekannte, in der Fig. 1 nicht gezeigte Fühler, die Betriebsparameter der Brennkraftmaschine 1 erfassen und dem Steuergerät 6 zuführen, sowie, in Fig. 1 ebenfalls nicht gezeigt, von dem Steuergerät 6 angesteuerte Stellglieder vorgesehen.

Das Abgasrückführventil 5 weist eine drehbar gelagerte Klappe 7 auf, mittels derer der Abgasrückführungskanal 4 ganz oder teilweise abgesperrt werden kann. Die Stellung der Klappe 7 ist durch einen Stellmotor 8 veränderbar, dessen Bewegung, wie in Fig. 1 durch einen Pfeil angedeutet, von dem Steuergerät 6 steuerbar ist. Dabei sind zwei in Fig. 1 nicht gezeigte Anschläge vorgesehen, die sicherstellen, dass die Klappe nur über einen Winkelbereich von 90° zwischen einer senkrechten Endstellung, in der der Abgasrückführungskanal 4 vollständig verschlossen ist, und einer waagerechten Endstellung, in der der Abgasrückführungskanal 4 vollständig geöffnet ist, bewegbar ist. Die senkrechte Endstellung und der entsprechende Anschlag wird im folgenden als rechte Endstellung bzw. rechter Anschlag und die waagerechte Endstellung und der entsprechende Anschlag als linke Endstellung bzw. linker Anschlag bezeichnet.

Eine Einrichtung zur Stellungsrückmeldung wird durch einen Drehwiderstand 9 und eine in dem Steuergerät angeordnete, in Fig. 1 nicht gezeigte Schaltung gebildet, die eine an dem Widerstand des Drehwiderstands abgefallene Spannung V ausgibt. Der Drehwiderstand 9 ist dabei mit einer Welle, mittels derer auch die Klappe 7 bewegbar ist, drehbar, wobei sich dessen Widerstand in Abhängigkeit von dem Drehwinkel ändert. Die Ist-Position der Klappe 7 ist daher durch den Spannungsabfall an dem Drehwiderstand 9 ermittelbar.

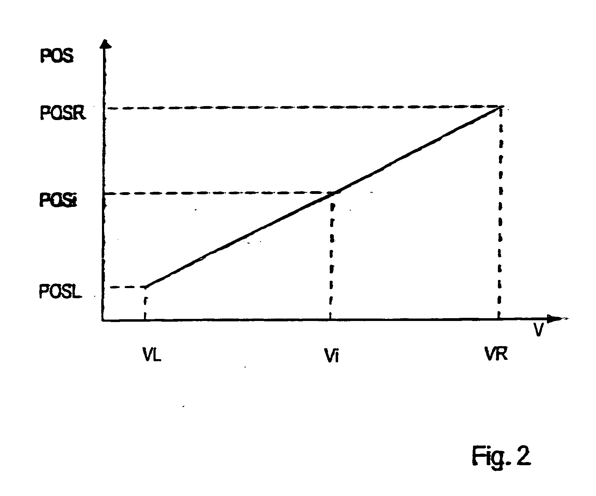

Hierzu wird die in Fig. 2 gezeigte Kennlinie verwendet, die einen Zusammenhang zwischen Winkelstellungen POS der Klappe 7 und Spannungswerten V qualitativ darstellt, so dass eine Angabe der Skalierung und der Einheiten an den Achsen nicht notwendig ist. Die Klappe 7 ist zwischen der linken und rechten Endstellung POSL und POSR kontinuierlich verstellbar, denen jeweils Spannungswerte VL und VR zugeordnet sind. Da die funktionale Form der Kennlinie durch eine Geradengleichung gegeben ist, ist die Kennlinie allein durch die Angabe der Wertepaare (VL, POSL) und (VR, POSR) an ihren Endpunkten festlegbar. Insbesondere kann die Kennlinie durch die Geradengleichung für die Stellung POS in Abhängigkeit von dem Spannungswert V

$$POS = (POSR - POSL)/(VR - VL) \ (V - VL) + POSL$$

dargestellt werden.

Im Abgaskanal 3 ist weiterhin ein Temperaturfühler 10 zur Erfassung der Abgastemperatur angeordnet, der der erfassten Temperatur entsprechende Signale an das Steuergerät 6 ausgibt.

Schließlich ist das Steuergerät 6 mit einem Diagnosesystem 11 verbunden, das der Erfassung von Fehlern und Auslösung entsprechender Maßnahmen dient.

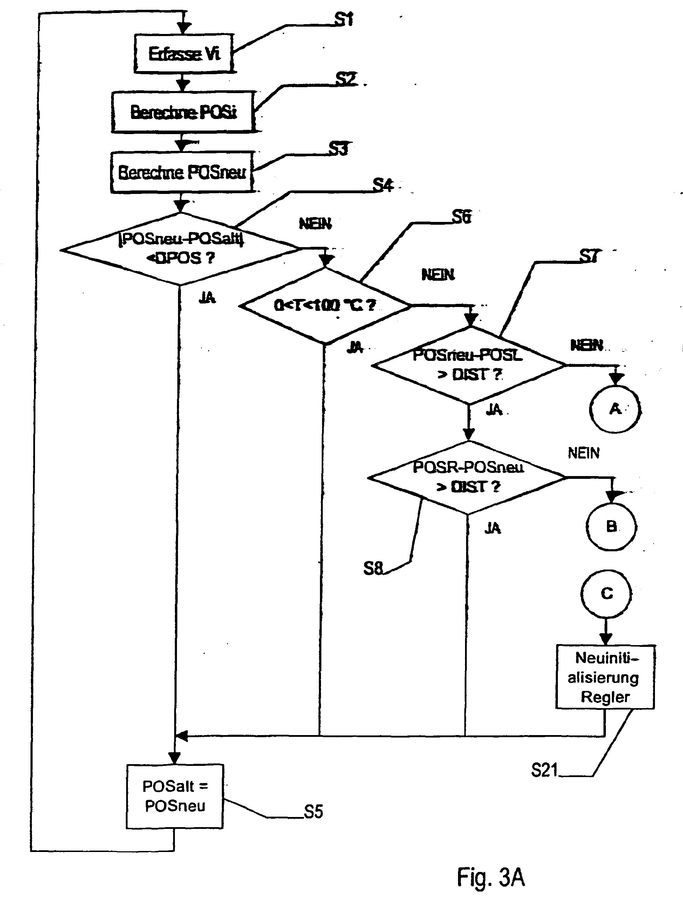

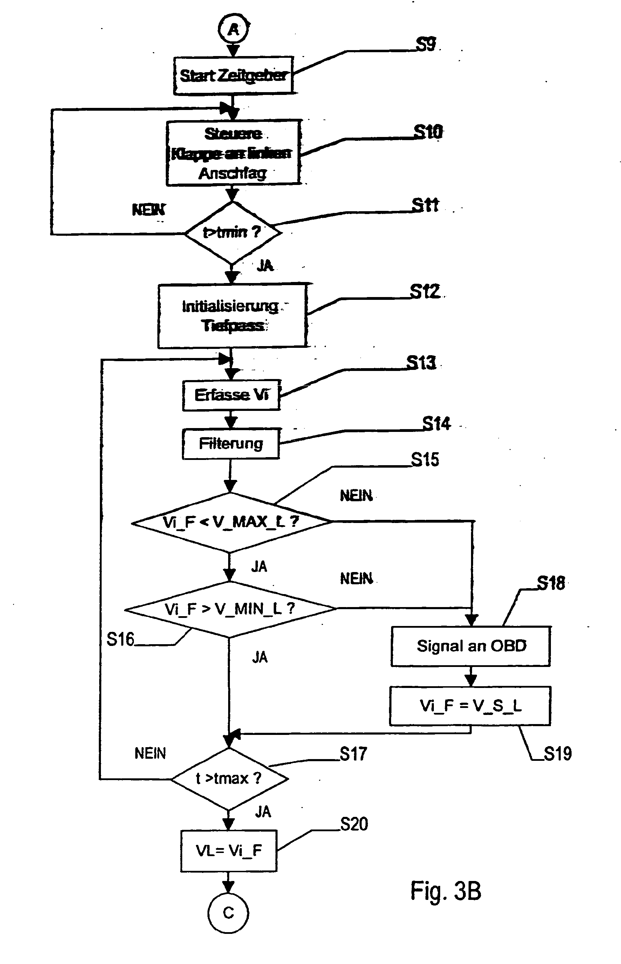

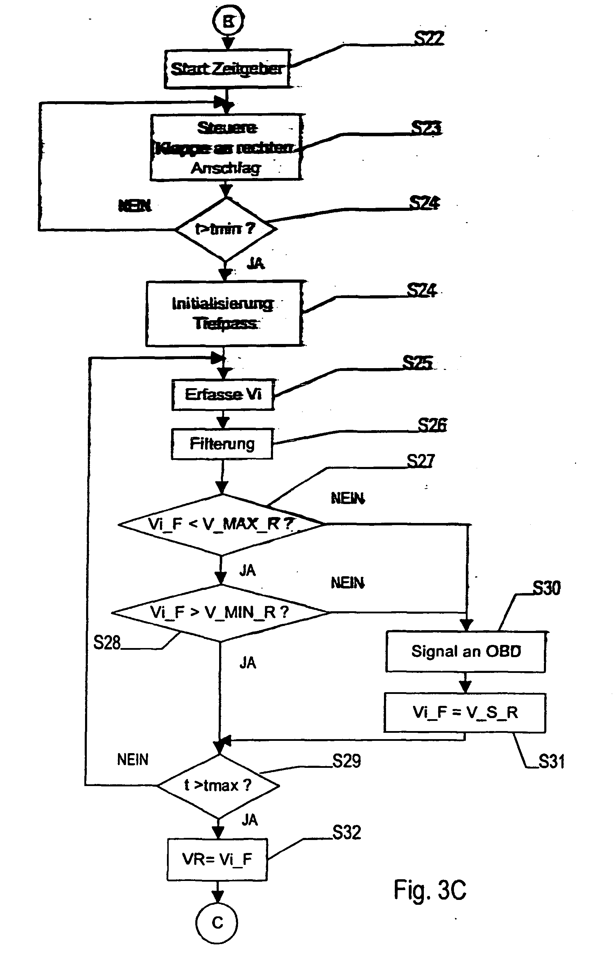

Die Stellung der Klappe T wird durch ein in dem Steuergerät 6 ablaufendes Programm gemäß dem Regelverfahren nach einer bevorzugten Ausführungsform der Erfindung geregelt. Das Regelverfahren ist in den Fig. 3A, 3B und 3C in Form eines Ablaufdiagramms schematisch dargestellt.

In Fig. 3A ist das eigentliche Verfahren zur Regelung der Stellung der Klappe 7 nur grob schematisch dargestellt, wobei die für die Erläuterung der Erfindung in ihren Einzelheiten nicht wichtigen Schritte nicht genauer dargestellt sind. Das Regelverfahren läuft dabei iterativ ab.

In Schritt S1 wird zunächst der Ist-Wert Vi des Spannungsabfalls an dem Drehwiderstand 9 erfasst.

In dem folgenden Schritt S2 wird dann anhand der in Fig. 2 gezeigten Kennlinie ein dem Ist-Wert Vi entsprechender Ist-Wert POSi der Stellung der Klappe 7 ermittelt. Dazu wird die oben angegebene Darstellung der Kennlinie verwendet, die sich aus der allgemeinen funktionalen Form einer linearen Funktion und der in dem Steuergerät 6 gespeicherten Werte der Variablen VR, POSR, VL und POSL ergibt.

In dem folgenden Schritt S3 wird in Abhängigkeit von weiteren, für die Beschreibung der Erfindung nicht wesentlichen, grundsätzlich bekannten Parametern auf der Basis des Ist-Wertes POSi ein Soll-Wert POSneu für die Stellung der Klappe 7 ermittelt und der Stellmotor 8 entsprechend angesteuert, so dass bei einer Änderung des Soll-Werts die Stellung der Klappe 7 verändert wird.

In den folgenden Schritten wird ermittelt, ob eine Adaption der Kennlinie durchgeführt werden soll.

In dem Schritt S4 wird dazu zunächst geprüft, ob die Änderungsgeschwindigkeit des Soll-Wertes POSneu für die Stellung der Klappe 7 einen vorgegebenen Schwellwert überschreitet.

Dazu wird der Betrag der Differenz zwischen dem neuen Soll-Wert POSneu und dem bei der letzten Iteration ermittelten Soll-Wert POSalt berechnet und mit einem Wert. DPOS verglichen, der dem Produkt aus dem vorgegebenen Schwellwert der Änderungsgeschwindigkeit und der für eine Iteration, d.h. den Durchlauf durch die Schritte S1 bis S8 maximal benötigten Zeit entspricht. Ist der Wert des ermittelten Betrages größer als DPOS, wird das Verfahren mit Schritt S5 fortgesetzt, in dem der Variablen POSalt der letzte Soll-Wert POSneu für die Stellung der Klappe 7 zugewiesen wird. Das Verfahren wird dann ohne Unterbrechung der Regelung mit Schritt S1 fortgesetzt.

Wird in Schritt S4 jedoch festgestellt, dass der Betrag der Differenz kleiner als der Wert DPOS und damit die Änderungsgeschwindigkeit des Soll-Wertes POSneu für die Stellung der Klappe 7 kleiner als der vorgegebenen Schwellwert ist, wird in Schritt S6 überprüft, ob die von dem Temperaturfühler 10 erfasste Temperatur T des Abgases in dem Abgaskanal 3 in einem vorgegebenen Temperaturbereich zwischen 0° und 100°C liegt. Ist dies der Fall, besteht kein Anlass zu der Annahme, dass eine Adaption der Kennlinie notwendig wäre, so dass das Verfahren mit Schritt S5 ohne eine Unterbrechung der Regelung fortgesetzt wird.

Andernfalls werden in den Schritten S7 und S8 Kriterien im Hinblick auf die Nähe zu einer Adaptionsstellung geprüft.

Zur Adaptionen werden in dem erfindungsgemäßen Verfahren nach diesem Ausführungsbeispiel die beiden Endstellungen der Klappe 7 verwendet, denen die Werte POSL beziehungsweise POSR für die Stellungen zugeordnet sind.

Wird in Schritt S6 festgestellt, dass die Temperatur sich nicht in dem vorgegebenen Bereich befindet, wird daher in Schritt S7 überprüft, ob sich der neue Soll-Wert für die Stellung außerhalb eines vorgegebenen Abstandes DIST von dem Wert POSL für die Adaptionsstellung befindet.

Ist dies der Fall, wird in Schritt S8 überprüft, ob sich der neue Soll-Wert für die Stellung auch außerhalb eines vorgegebenen Abstandes DIST von dem Wert POSR für die Adaptionsstellung befindet. Wird festgestellt, dass diese Bedingung zutrifft, wird das Verfahren mit dem Schritt S5 fortgesetzt, ohne dass die Regelung unterbrochen und eine Adaption durchgeführt wird. Denn der Soll-Wert für die Stellung ist in diesem Fall zu weit von dem Wert für eine der Adaptionsstellungen entfernt, so dass die Klappe 7 über einen weiten Winkelbereich in eine der Adaptionsstellungen bewegt werden müsste, wodurch die Regelung für eine vergleichsweise lange Zeit unterbrochen werden müsste.

Wird in Schritt S7 festgestellt, dass der Soll-Wert für die Stellung hinreichend nahe bei dem Wert POSL für die Adaptionsstellung liegt, wird das im wesentlichen in Fig. 3B dargestellte Adaptionsverfahren durchgeführt, wodurch die eigentliche, in den Schritten S1 und S2 ablaufende Regelung der Stellung der Klappe 7 unterbrochen wird.

Da die Adaption nur über einen bestimmten Zeitraum durchgeführt wird, wird zunächst in Schritt S9 ein in dem Steuergerät 6 enthaltener, in Fig. 1 nicht gezeigter Zeitgeber gestartet. Bei Verwendung einer digitalen Steuerung kann es sich hierbei insbesondere um einen einfachen, im Takt der digitalen Steuerung inkrementierten Zähler handeln.

Daraufhin wird in Schritt S10 der Stellmotor 8 so angesteuert, dass die Klappe 7 mit einer vorgegebenen Drehgeschwindigkeit in Richtung auf den linken Anschlag für die linke Adaptionsstellung zu bewegt wird.

Während der Bewegung der Klappe 7 wird in Schritt S11 die aktuelle Zeit des Zeitgebers daraufhin überprüft, ob eine Min destzeit tmin überschritten wurde. Ist dies nicht der Fall, wird die Drehung der Klappe 7 mittels des Stellmotors 8 fortgesetzt. Die Zeit tmin ist hierbei so groß gewählt, dass die Klappe 7 bei der gewählten Drehgeschwindigkeit des Stellmotors 8 im Rahmen zu erwartender Abweichungen von der Kennlinie auf jeden Fall erreicht wird, wobei die Klappe 7 gegebenenfalls durch den Stellmotor 8 für eine gewisse Zeit gegen den linken Anschlag gepresst wird. Hiermit kann weitgehend gewährleistet werden, dass sich nach der Zeit tmin die Klappe auch tatsächlich an dem linken Anschlag befindet.

Wird die Zeit tmin überschritten, wird in Schritt S12 ein Tiefpassfilter für bei der Adaption erfasste Spannungswerte Vi für den Spannungsabfall an dem Drehwiderstand 9 in dem Steuergerät 6 initialisiert. Dieser Tiefpassfilter ermittelt im wesentlichen einen gleitenden, gewichteten Mittelwert über zwei Zeitschritte.

In Schritt S13 wird darauf der dem Ist-Miderstand des Drehwiderstandes und damit der Position der Klappe 7 entsprechende Spannungswert Vi erfasst und in Schritt S14 einer Filterung in dem Tiefpassfilter unter Bildung eines gefilterten Spannungswertes Vi_F unterzogen.

Dieser gefilterte Spannungswert Vi_F wird dann in den Schritten S15 und S16 einer Plausibilitätsprüfung unterzogen. Hierbei wird geprüft, ob der gefilterte Spannungswert Vi_F innerhalb eines von dem Hersteller des Abgasrückführventils angegebenen Toleranzbereichs liegt.

Genauer wird in Schritt S15 geprüft, ob der gefilterte Spannungswert Vi_F kleiner als ein oberer Toleranzwert V_MAX_L für den linken Anschlag ist, und in Schritt S16, ob der gefilterte Spannungswert Vi_F größer als ein unterer Toleranzwert V_MIN_L für den linken Anschlag ist.

Sind beide Bedingungen erfüllt, wird in Schritt S17 überprüft, ob eine für die Adaption vorgegebene maximale Zeitdauer tmax überschritten wurde. Ist dies nicht der Fall, wird erneut ein Spannungswert Vi erfasst, woraufhin die Schritte S14 bis S16 wiederholt werden.

Ist eine der Bedingungen nicht erfüllt, wird in Schritt S18 ein Signal an das Diagnosesystem 11 (OBD) ausgegeben, das für den Fehler, dass der Spannungswert am linken Anschlag außerhalb des Toleranzbereichs liegt, charakteristisch ist.

In Schritt S19 wird daraufhin der gefilterte Spannungswert Vi_F auf einen vorgegebenen Ersatzwert V_S_L für den linken Anschlag gesetzt, so dass das Regelverfahren später mit einer sinnvollen, durch den Ersatzwert gegebenen Ersatzkennlinie fortgesetzt werden kann.

Wird in Schritt S17 festgestellt, dass die maximale, für die Adaption vorgesehene Zeit tmax überschritten ist, wird in Schritt S20 als Adaptionswert der letzte Wert Vi_F benutzt; und der Spannungswert VL für den linken Anschlag auf diesen Adaptionswert gesetzt und abgespeichert. Dieser wird dann in der Geradengleichung für die - nun adaptierte - Kennlinie verwendet.

Selbstverständlich müssen die Schritte S15 und S16 nicht unbedingt in dieser Reihenfolge oder nacheinander ausgeführt werden. Insbesondere kann zur Prüfung der Plausibilitätsbedingung eine digitale Schaltung mit einem ODER-Gatter verwendet werden.

Nach Abschluss dieser Adaption wird in Schritt S21 der Integralanteil des Reglers bzw. des Regelverfahrens neu initialisiert, woraufhin mit Schritt S5 das normale Regelverfahren wieder aufgenommen wird.

Wird in Schritt S8 festgestellt, dass sich der Soll-Wert für die Stellung hinreichend nahe bei dem Wert POSR für die rechte Adaptionsstellung befindet, wird das im wesentlichen in Fig. 3C dargestellte Adaptionsverfahren durchgeführt, wobei die im wesentlichen durch die Schritte S1 und S2 erfolgende Stellungsregelung unterbrochen wird. Die in Fig. 3C dargestellte Adaption der Kennlinie für den rechten Anschlag entspricht im wesentlichen der in Fig. 3B dargestellten Adaption der Kennlinie für den linken Anschlag- Insbesondere entsprechen die Schritte S22 bis S31 den Schritten S9 bis S20, wobei jedoch die Grenzen V_MIN_L und V_MAX_L des Toleranzbereichs für den Spannungswert am linken Anschlag ersetzt sind durch entsprechende Grenzen V_MIN_R und V_MAX_R des Toleranzbereichs für den Spannungswert am rechten Anschlag. Weiterhin ist das Signal an das Diagnosesystem entsprechend modifiziert, so dass das Diagnosesystem feststellen kann, ob der Fehler am linken oder am rechten Anschlag aufgetreten ist. Schließlich wird bei Auftreten eines Fehlers für den gefilterten Spannungswert nun als Ersatzwert an Stelle des Ersatzwertes V_S_L der Ersatzwert V_S_R verwendet.

Das geschilderte Regelverfahren nach einer bevorzugten Ausführungsform der Erfindung gestattet es, nicht nur die Kennlinie während des Betriebs der Brennkraftmaschine 1 bei einer möglichst kurzen Unterbrechung der Regelung der Stellung des Abgasrückführventils 5 zu adaptieren, sondern auch das Auftreten von Fehlern mittels der an das Diagnosesystem ausgegebenen Fehlersignale zu erkennen und dabei gleichzeitig als Adaptionswert einen Ersatzwert bereitzustellen, der eine weitere Funktion der Stellungsregelung erlaubt.

**Patentansprüche**

1. Regelverfahren, bei dem die Stellung einer Stelleinrichtung (7), die eine Einrichtung (9) zur Stellungsrückmeldung aufweist und in einem Bereich zwischen zwei Endstellungen bewegbar ist, unter Verwendung einer Messgröße (Vi), die von der Einrichtung (9) zur Stellungsrückmeldung in Abhängigkeit von der Stellung der Stelleinrichtung (5) abgegeben wird, und einer Kennlinie, mittels derer jedem Wert der Messgröße ein Ist-Wert für die Stellung (POSi) zugeordnet wird, auf einen Soll-Wert für die Stellung geregelt wird und auf der Basis des Ist-Wertes (POSi) ein neuer Soll-Wert (POSneu) für die Stellung der Stelleinrichtung (7) ermittelt wird (S3) **dadurch gekennzeichnet, dass** während der Regelung der neue Soll-Wert für die Stellung überwacht wird und dass die Kennlinie adaptiert wird, wenn der neue Sollwert (POSneu) für die Stellung der Stelleinrichtung (7) innerhalb eines vorgegebenen Abstands (DIST) von einer für die Adaption vorgesehenen Adaptionsstellung (POSL, POSR) liegt, wobei zur Adaption

   - die Regelung unterbrochen wird,
   - die Stelleinrichtung (7) in die Adaptionsstellung gesteuert wird,
   - in der Adaptionsstellung (POSL, POSR) ein Wert der Messgröße als Adaptionswert erfasst wird und
   - die Kennlinie unter Verwendung des Adaptionswertes und der Adaptionsstellung angepasst wird.

2. Verfahren nach Anspruch 1, **dadurch gekennzeichnet, dass** während der Regelung die Erfüllung mindestens einer weiteren Bedingung in Bezug auf die Regelung überwacht wird und dass die Adaption der Kennlinie nur durchgeführt wird, wenn die Bedingung erfüllt ist.

3. Verfahren nach Anspruch 2, **dadurch gekennzeichnet, dass** die zeitliche Änderung des Soll-Wertes für die Stellung oder des Ist-Wertes für die Stellung überwacht wird und dass die Adaption der Kennlinie nur durchgeführt wird, wenn der Betrag der zeitlichen Änderung des Soll-Wertes beziehungsweise des Ist-Wertes kleiner als ein Maximalwert ist.

4. Verfahren nach einem der vorhergehenden Ansprüche, **dadurch gekennzeichnet, dass** eine Stelleinrichtung (7) verwendet wird, die so ausgebildet ist, dass ihre Stellung nicht über mindestens eine der Endstellungen hinaus veränderbar ist, und dass diese Endstellung der Stelleinrichtung (7) als Adaptionsstellung verwendet wird.

**5.** Verfahren nach einem der vorhergehenden Ansprüche, **dadurch gekennzeichnet, dass** der Wert der Messgröße nach Ablauf einer vorgegebenen Zeitspanne nach Unterbrechung der Regelung erfasst wird.

**6.** Verfahren nach Anspruch 4 oder nach Anspruch 5 und Anspruch 4, **dadurch gekennzeichnet, dass** das Erreichen der Adaptionsstellung durch Überwachung der Stromaufnahme einer elektrischen Antriebseinrichtung (8) der Stelleinrichtung (7) festgestellt wird.

**7.** Verfahren nach einem der vorhergehenden Ansprüche, **dadurch gekennzeichnet, dass** die Kennlinie als Funktion darstellbar ist, die durch ein oder zwei Paare von einander zugeordneten Adaptionswerten der Messgröße und dem entsprechenden Wert für die Adaptionsstellung parametrisierbar ist.

**8.** Verfahren nach einem der vorhergehenden Ansprüche, **dadurch gekennzeichnet, dass** der in der Adaptionsstellung erfasste Wert der Messgröße einer Plausibilitätsprüfung unterzogen wird, und dass bei Feststellung eines nicht plausiblen Wertes ein entsprechendes Signal an eine Diagnoseeinrichtung ausgegeben wird.

**9.** Verfahren nach Anspruch 8, **dadurch gekennzeichnet, dass** bei der Plausibilitätsprüfung geprüft wird, ob der in der Adaptionsstellung erfasste Wert der Messgröße innerhalb eines vorgegebenen Wertebereichs liegt.

**10.** Verfahren nach Anspruch 8 oder 9, **dadurch gekennzeichnet, dass** bei Feststellung eines nicht plausiblen Wertes statt des erfassten Wertes ein vorgegebener Ersatzwert verwendet wird.

**11.** Verfahren nach einem der vorhergehenden Ansprüche, **dadurch gekennzeichnet, dass** die Adaptionswerte mehrerer Adaptionsvorgänge zur Diagnose von Fehlern verwendet werden.

**12.** Verfahren nach einem der vorhergehenden Ansprüche, **dadurch gekennzeichnet, dass** der Wert der Messgröße in der Adaptionsstellung mehrfach erfasst wird und der Adaptionswert der Messgröße durch Filterung der erfassten Werte gebildet wird.

**13.** Verfahren nach einem der vorhergehenden Ansprüche, **dadurch gekennzeichnet, dass** ein integrierendes Element des Regelverfahrens bei Wiederaufnahme der Regelung neu initialisiert wird.

**14.** Verfahren nach einem der vorhergehenden Ansprüche, **dadurch gekennzeichnet, dass** die Stellung einer Klappe (7) eines Abgasrückführventils (5) einer Brennkraftmaschine geregelt wird.

## Claims

**1.** Control method in which the setting for a setting device (7), having a device (9) for reporting the setting and being movable in a range between two end positions using a measured parameter (Vi) given by the device (9) for reporting the setting depending on the setting of the setting device (5), and a characteristic curve, whereby an actual value for the setting (POSi) is assigned to each value of the measured parameter, is regulated to a set value for the setting, and on the basis of the actual value (POSi) a new set value (POSnew) is determined (S3) for the setting of the setting device (7), **characterised in that** during regulation the new set value for the setting is monitored, and **in that** when the new set value (POSnew) for the setting of the setting device (7) lies within a given distance (DIST) from an adaptation setting (POSL, POSR) provided for the adaptation, the characteristic curve is adapted by

- interrupting regulation,
- driving the setting device (7) to the adaptation setting,
- in the adaptation setting (POSL, POSR) capturing a value of the measured parameter as an adaptation value and
- adapting the characteristic curve by using the adaptation value and the adaptation setting.

**2.** Method according to claim 1, **characterised in that** during regulation the fulfilment of at least one further condition relating to the regulation is monitored, and the characteristic curve is adapted only when the condition is fulfilled.

3. Method according to claim 2, **characterised in that** the change over time in the set value for the setting or the actual value for the setting is monitored, and **in that** adaptation of the characteristic curve is carried out only when the length of time over which the set value or actual value changes is less than a maximum value.

4. Method according to one of the previous claims, **characterised in that** a setting device (7) is used which is designed so that its setting cannot be changed beyond at least one of the end positions, and **in that** this end position of the setting device (7) is used as the adaptation setting.

5. Method according to one of the previous claims, **characterised in that** the value of the measured parameter is acquired after a given length of time following an interruption to the regulation.

6. Method according to claim 4 or according to claims 5 and 4, **characterised in that** the point at which the adaptation setting is reached is determined by monitoring the current consumption of an electrically operated driving device (8) of the setting device (7).

7. Method according to one of the previous claims, **characterised in that** the characteristic curve can be represented as a function which can be allocated parameters by one or two pairs of mutually assigned adaptation values of the measured parameter and the corresponding value for the adaptation setting.

8. Method according to one of the previous claims, **characterised in that** the measured parameter value captured in the adaptation setting is subjected to a plausibility check, and **in that** if an implausible value is detected a signal to that effect is sent to a diagnostic device.

9. Method according to claim 8, **characterised in that** the plausibility check examines whether the measured parameter value captured in the adaptation setting lies within a given value range.

10. Method according to claims 8 or 9, **characterised in that** if an implausible value is detected, a given substitute value is used instead of the captured value.

11. Method according to one of the previous claims, **characterised in that** the adaptation values from a plurality of adaptation processes are used for the purpose of error diagnostics.

12. Method according to one of the previous claims, **characterised in that** the value of the measured parameter in the adaptation setting is captured a plurality of times and the adaptation value of the measured parameter is formed by filtering the captured values.

13. Method according to one of the previous claims, **characterised in that** an integrating element of the control method is reinitialised when the regulation is resumed.

14. Method according to one of the previous claims, **characterised in that** the setting of a butterfly valve (7) of an exhaust gas recirculation valve (5) in an internal combustion engine is regulated.

**Revendications**

1. Procédé de régulation, dans lequel la position d'un dispositif de réglage (7), qui présente un dispositif (9) de répétition de position et qui peut se déplacer dans une zone située entre deux positions d'extrémité, est réglée sur une valeur de consigne pour la position avec utilisation d'une grandeur de mesure (Vr) qui est donnée par le dispositif (9) de répétition de position en fonction de la position du dispositif de réglage (5) et avec utilisation d'une courbe caractéristique à l'aide de laquelle est attribuée à chaque valeur de la grandeur de mesure une valeur réelle pour la position (POSr), et sur la base de la valeur réelle (POSr) une nouvelle valeur de consigne (POSnouvelle) est déterminée (S3) pour la position du dispositif de réglage (7), **caractérisé en ce que** pendant la régulation la nouvelle valeur de consigne pour la position est contrôlée et
**en ce que** la courbe caractéristique est adaptée lorsque la nouvelle valeur de consigne (POSnouvelle) pour la position du dispositif de réglage (7) se situe à l'intérieur d'une distance prédéfinie (DIST) d'une position d'adaptation prévue pour l'adaptation (PSOG, POSD), sachant que pour l'adaptation

- le réglage est interrompu,
- le dispositif de réglage (7) est dirigé en position d'adaptation,
- dans la position d'adaptation (PSOG, POSD) une valeur de la grandeur de mesure est enregistrée comme valeur d'adaptation et
- la courbe caractéristique est adaptée par utilisation de la valeur d'adaptation et de la position d'adaptation.

2. Procédé selon la revendication 1, **caractérisé en ce que** pendant la régulation un contrôle est effectué pour savoir si au moins une autre condition concernant la régulation est remplie, et **en ce que** l'adaptation de la courbe caractéristique n'est effectuée que si la condition est remplie.

3. Procédé selon la revendication 2, **caractérisé en ce que** la modification temporelle de la valeur de consigne pour la position ou de la valeur réelle pour la position est contrôlée, et **en ce que** l'adaptation de la courbe caractéristique n'est effectuée que si la somme de la modification temporelle de la valeur de consigne et/ou de la valeur réelle est inférieure à une valeur maximale.

4. Procédé selon l'une quelconque des revendications précédentes, **caractérisé en ce qu'**un dispositif de réglage (7) est utilisé, lequel est conçu de telle sorte que sa position ne peut pas être modifiée au-delà au moins d'une des positions d'extrémités, et
**en ce que** cette position d'extrémité du dispositif de réglage (7) est utilisée comme position d'adaptation.

5. Procédé selon l'une quelconque des revendications précédentes, **caractérisé en ce que** la valeur de la grandeur de mesure est enregistrée après écoulement d'une durée prédéterminée après interruption de la régulation.

6. Procédé selon la revendication 4 ou selon la revendication 5, **caractérisé en ce que** l'on constate si la position d'adaptation a été atteinte par contrôle de la consommation de courant d'un dispositif d'entraînement (8) électrique du dispositif de réglage (7).

7. Procédé selon l'une quelconque des revendications précédentes, **caractérisé en ce que** la courbe caractéristique peut être représentée comme fonction, qui peut être paramétrée par une ou deux paires de valeurs d'adaptation de la grandeur de mesure attribuées l'une à l'autre et de la valeur correspondante pour la position d' adaptation.

8. Procédé selon l'une quelconque des revendications précédentes, **caractérisé en ce que** la valeur de la grandeur de mesure enregistrée dans la position d'adaptation est soumise à un contrôle de vraisemblance, et
**en ce qu'**en cas de constatation d'une valeur non vraisemblable un signal correspondant est donné à un dispositif de diagnostic.

9. Procédé selon la revendication 8, **caractérisé en ce que** lors du contrôle de vraisemblance on contrôle si la valeur de la grandeur de mesure enregistrée dans la position d'adaptation se situe à l'intérieur d'une plage de valeurs prédéterminée.

10. Procédé selon la revendication 8 ou 9, **caractérisé en ce qu'**en cas de constatation d'une valeur non vraisemblable une valeur de remplacement prédéfinie est utilisée à la place de la valeur enregistrée.

11. Procédé selon l'une quelconque des revendications précédentes, **caractérisé en ce que** les valeurs d'adaptation de plusieurs processus d'adaptation sont utilisées pour diagnostiquer des erreurs.

12. Procédé selon l'une quelconque des revendications précédentes, **caractérisé en ce que** la valeur de la grandeur de mesure dans la position d'adaptation est enregistrée à plusieurs reprises et la valeur d'adaptation de la grandeur de mesure est formée par filtrage des valeurs enregistrées.

13. Procédé selon l'une quelconque des revendications précédentes, **caractérisé en ce qu'**un élément intégrant du procédé de régulation est réinitialisé lors de la reprise de la régulation.

14. Procédé selon l'une quelconque des revendications précédentes, **caractérisé en ce que** la position d'un clapet (7) d'une vanne de recyclage des gaz d'échappement (5) d'un moteur à combustion interne est réglée.

Fig. 1

POSneu

Vi

EP 1 425 637 B1

Fig. 2

Fig. 3A

Fig. 3B

Fig. 3C